# EUROPEAN PATENT SPECIFICATION

(11) **EP 1 790 552 B1**
(45) Date of publication and mention of the grant of the patent: **30.09.2009**
(21) Application number: 06024218.7
(22) Date of filing: 22.11.2006
(51) Int. Cl.: B62D 21/15, B62D 25/08

(54) **Vehicle body rear portion structure**
Heckstruktur einer Kraftfahrzeugkarosserie
Structure de la partie arrière d'un véhicule automobile

(30) Priority: 24.11.2005 JP 2005339397
(43) Date of publication of application: 30.05.2007
(73) Proprietor: TOYOTA JIDOSHA KABUSHIKI KAISHA, Toyota-shi, Aichi-ken, 471-8571 (JP)
(72) Inventor: Fukuda, Ken, Toyota-shi, Aichi-ken, 471-8571 (JP); II, Yukinori, Toyota-shi, Aichi-ken, 471-8571 (JP)
(74) Representative: Winter, Brandl, Fürniss, Hübner Röss, Kaiser, Polte Partnerschaft Patent- und Rechtsanwaltskanzlei

(56) References cited:
- EP-A1- 1 099 584
- EP-A2- 0 937 631
- JP-A- 6 270 845
- JP-A- 09 086 178
- JP-A- 2002 225 561
- US-A- 5 246 263
- US-A- 5 354 115
- US-A1- 2004 080 188

## Description

### BACKGROUND OF THE INVENTION

### 1. Field of the Invention

The invention relates to a vehicle body rear portion structure with improved side impact performance.

### 2. Description of the Related Art

Japanese Patent Application Publication No. JP-A-7-323866 discloses a similar vehicle body rear portion structure in which a rear side member is arranged inward of a rocker, in the vehicle width direction, at a rear portion on both sides of the vehicle body, and a cross member is arranged between the left and right rockers.

With such a vehicle body rear portion structure, a lateral load input at a location offset above the rockers, for example, a side impact near a rear wheelhouse at the vehicle body rear portion, is not easily transmitted to a vehicle body frame member, such as the cross member.

Similar vehicle rear body portion structures are known from US 5 354 115 A, US 2004/0 080 188 A1, EP 1 099 584 A1 and US 5 246 263.

JP09- 086178 A discloses that a reinforcement is provided between a quarter panel and a rear wheel outer panel.

JP 2002 225 561 A is considered as closest prior art showing the subject matter of the preamble of claim 1.

### SUMMARY OF THE INVENTION

This invention aims to minimize deformation of the vehicle body by efficiently transmitting a lateral load, which is input offset above a rocker, or the like, at a vehicle body rear portion, to a vehicle body frame member during a side impact to the vehicle body rear portion.

This object is solved by a vehicle rear body portion structure according to claim 1.

The vehicle body rear portion structure according to the present invention is such that the lateral load is transmitted via the load-transmitting means to a vehicle body frame member that includes the rocker and the rear side member. Therefore, during a side impact to the vehicle body rear portion, the lateral load can be directly, i.e., efficiently, transmitted from the load-transmitting means to the vehicle body frame member. As a result, the lateral load is distributed, making it possible to minimize deformation of the vehicle body.

In the vehicle body rear portion structure according to the present invention, the vehicle body side portion reinforcing-member is provided above the rocker at the vehicle body side portion between a door inner and outer panels of a door of a vehicle body, in such a manner that a rear end side is angled downward and the first load-transmitting member is provided between that vehicle body side portion reinforcing-member and the rear side member. As a result, the lateral load input to the vehicle body side portion during a side impact can be transmitted from the vehicle body side portion reinforcing-member to the rear side member via the first load-transmitting member. Transmitting the lateral load to the rear side member and distributing it enables vehicle body deformation of the vehicular rear seat portion to be minimized.

In the foregoing vehicle body rear portion structure, the rear side member may have a low portion on a front side in the longitudinal direction of the vehicle body, a high portion on a rear side in the longitudinal direction of the vehicle body of the low portion, and rising portion that connects the low portion and the high portion, and the first load-transmitting member may be provided facing the rising portion in the vehicle width direction.

In this vehicle body rear portion structure, a rising portion is provided on the rear side member. As a result, the positions in the vertical direction of the vehicle body of the vehicle body side portion reinforcing-member and the rear side member are able to be close together. Also, the first load-transmitting member is provided facing the rising portion of the rear side member in the vehicle width direction. Accordingly, the difference in height (i.e., amount of vertical offset) between the position where the lateral load is transmitted from the vehicle body side portion reinforcing-member to the first load-transmitting member and the position where the lateral load is transmitted from the first load-transmitting member to the rear side member is able to be reduced, which enables a reduction in vehicle body reinforcement compared to when that difference (i.e., amount of offset) is large.

The vehicle body rear portion structure may also include vertical offset inhibiting means for inhibiting relative vertical movement between the first load-transmitting member and the rear side member when the lateral load is transmitted.

With this vehicle body rear portion structure, relative vertical movement between the first load-transmitting member and the rear side member when the lateral load is transmitted is inhibited by the vertical offset inhibiting means. Therefore, even if the path along which the load is transmitted from the vehicle body side portion reinforcing-member to the rear side member is vertically offset, sliding does not easily occur at the portion where the load-transmitting member and the rear side member face one another. As a result, the lateral load input during a side impact can be directly, i.e., efficiently, transmitted to the rear side member along the load-transmitting path from the vehicle body side portion reinforcing-member to the rear side member via the first load-transmitting member.

In the foregoing vehicle body rear portion structure, the load-transmitting means may include a first reinforcing-member, which is provided above the rear side member of a rear wheelhouse and reinforces the rear wheelhouse against the lateral load, and a second load-transmitting member, which is provided to the inside, in the vehicle width direction, of the first reinforcing-member and transmits the lateral load, input via the first reinforcing-member, in the vehicle width direction.

This vehicle body rear portion structure includes a first reinforcing-member, which is provided above the rear side member of the rear wheelhouse and reinforces the rear wheelhouse, and a second load-transmitting member, which is provided to the inside, in the vehicle width direction, of the first reinforcing-member. As a result, a lateral load that is input near the rear wheelhouse during a side impact can be transmitted in the vehicle width direction to the second load-transmitting member through the first reinforcing-member. Therefore, the lateral load can be transmitted from the first reinforcing-member of one rear wheelhouse to the first reinforcing-member of the other rear wheelhouse such that vehicle body deformation above the rear side member can be minimized over a wide area in the vertical direction of the vehicle body.

In the foregoing vehicle body rear portion structure, the second load-transmitting member may be provided on a vehicular rear seat portion.

Providing the second load-transmitting member on the vehicular rear seat portion in this way enables deformation of the vehicle body at a portion near where an occupant sits in the vehicular rear seat to be suppressed, which in turn makes it possible to reduce vehicle body reinforcement compared to when the second load-transmitting member is provided at a portion far from the occupant.

The foregoing vehicle body rear portion structure may also include a second reinforcing-member that extends in the vertical direction of the vehicle body on the rear side in the longitudinal direction of the vehicle body of the first reinforcing-member and reinforces the rear wheelhouse, and the first reinforcing-member may either extend to near the second reinforcing-member or be joined to the second reinforcing-member.

In this vehicle body rear portion structure, a second reinforcing-member is provided that extends in the vertical direction of the vehicle body on the rear side in the longitudinal direction of the vehicle body of the first reinforcing-member and reinforces the rear wheelhouse. Further, the first reinforcing-member extends to near the second reinforcing-member or is joined to the second reinforcing-member. As a result, when an impact imparts a lateral load to the rear wheelhouse, cave-in of the rear wheelhouse above and below the second load-transmitting member is suppressed. Therefore, the lateral load from the impact side can be directly, i.e., efficiently, transmitted along the load transmitting path from the first reinforcing-member to the second load-transmitting member. In addition, it is possible to more reliably inhibit vehicle body deformation over a wide area in the vertical direction of the vehicle body at the vehicular rear seat portion.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
FIG. 1 is a perspective view of a vehicle body rear portion structure according to a first example embodiment of the invention as viewed from inside the vehicle cabin looking toward the right rear portion of the vehicle body;
FIG. 2 is a side view of a vehicle body rear portion structure according to the first example embodiment of the invention as viewed from inside the vehicle cabin looking toward the right side portion of the vehicle body;
FIG. 3 is a sectional view taken along arrow 3 - 3 in FIG. 1;
FIG. 4 is a sectional view taken along arrow 4 - 4 in FIG. 1;
FIG. 5 is a perspective view of a vehicle body rear portion structure according to a second example embodiment of the invention as viewed from inside the vehicle cabin looking toward the right rear portion of the vehicle body;
FIG. 6 is a side view of the vehicle body rear portion structure according to the second example embodiment of the invention as viewed from inside the vehicle cabin looking toward the right side portion of the vehicle body;
FIG. 7 is a sectional view taken along arrow 7 - 7 in FIG. 6;
FIG. 8 is a sectional view of a load transmitting path of a lateral load in the vehicle body rear portion structure according to the second example embodiment of the invention; and
FIG. 9 is a sectional view of the vehicle body rear portion structure according to a modified example of the second embodiment, which corresponds to the sectional view taken along arrow 7 - 7 in FIG. 6.

### DETAILED DESCRIPTION OF THE PREFERRED EMBODIMENTS

Hereinafter, example embodiments of the invention will be described with reference to the accompanying drawings.

### [First example embodiment]

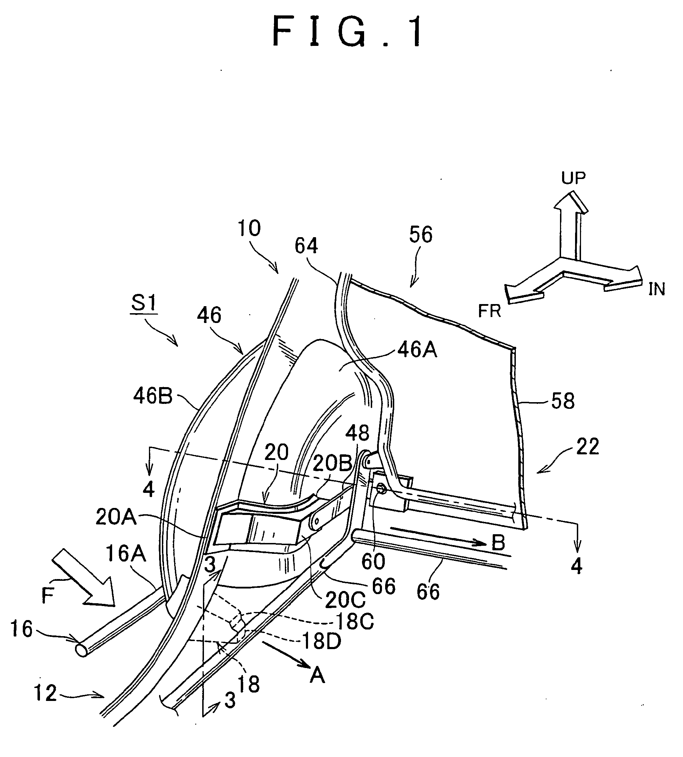

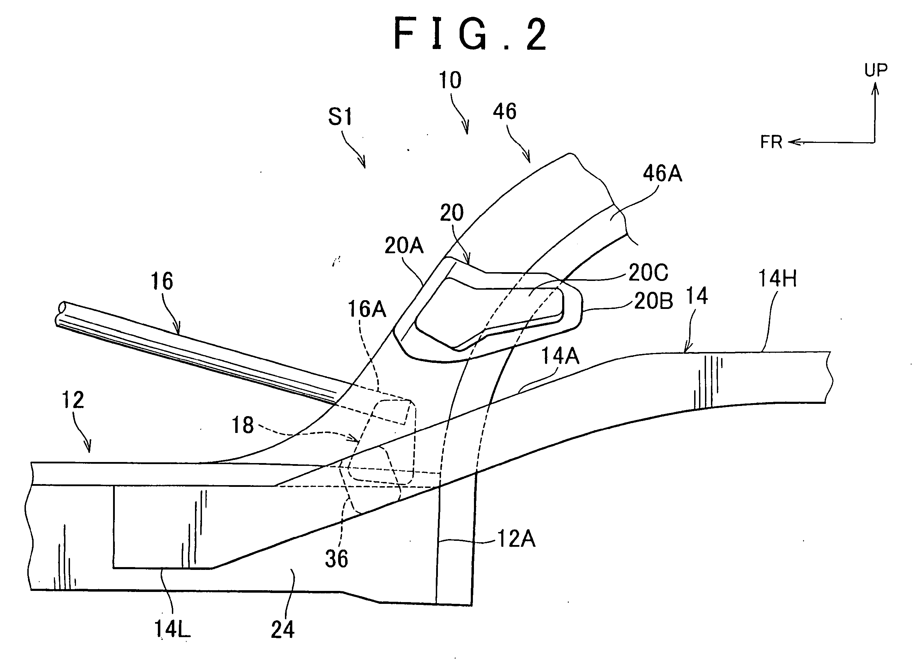

A vehicle body rear portion structure S1 according to a first example embodiment of the embodiment shown in FIGS. 1 and 2 takes a side impact at a rear portion of a vehicle body 10 into account and thus includes a rocker 12, a rear side member 14, a vehicle body side portion reinforcing-member 16, which serves as one example of load-transmitting means, a load-transmitting member 18, a reinforcing-member 20, and a second load-transmitting member 22.

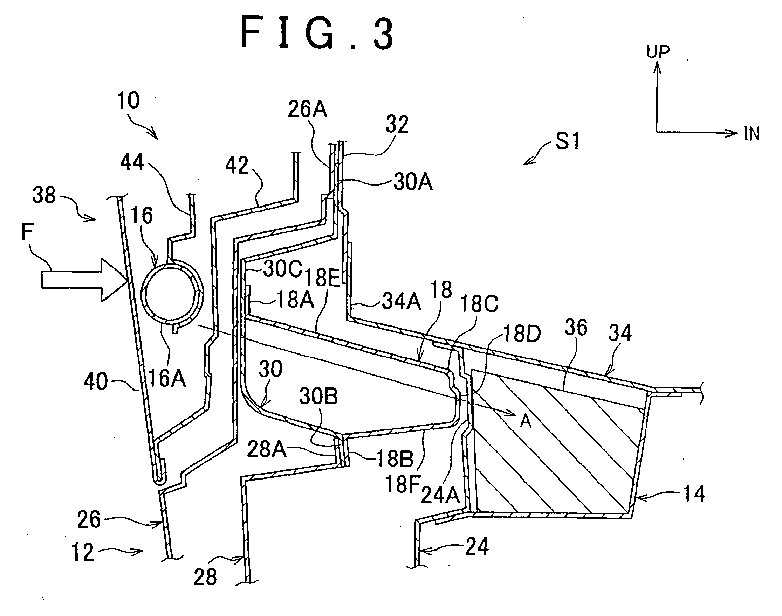

The rocker 12 is one type of vehicle body frame member that extends in the longitudinal direction of the vehicle body on both sides of the vehicle body 10. As shown in FIG. 2, a portion 12A of the rocker 12 extends to the front end of a rear wheelhouse 46, for example. As shown in FIG. 3, the rocker 12 is such that an inner face of the rocker inner 24 on the inside in the vehicle width direction is joined in the vehicle width direction with a rocker outer 26 on the outside in the vehicle width direction, and a reinforcement 30, to which a rocker outer reinforcement 28 and the load-transmitting member 18 are attached, is arranged between the rocker inner 24 and the rocker outer 26.

An extending portion 30C of the reinforcement 30, which extends toward the outside in the vehicle width direction, is positioned to the inside, in the vehicle width direction, of a rear end portion 16A of the vehicle body side portion reinforcing-member 16, for example, and close to the rocker outer 26. A lower edge 30B of the reinforcement 30 is positioned substantially in the center of the rocker 12, in the vehicle width direction, and is joined to an upper edge 28A of the rocker outer reinforcement 28. An upper edge 30A of the reinforcement 30 is joined to both the upper edge 26A of the rocker outer 26 and an inner panel 32.

As shown in FIGS. 2 and 3, a rear side member 14 is provided to the inside of the rocker inner 24, in the vehicle width direction, so that a load can at least be transmitted in the vehicle width direction between it and the rocker 12. A floor panel 34 is joined to an upper side of the rocker inner 24 and the rear side member 14. In the sectional view shown in FIG. 3, the rear side member 14 is structured as a section that is closed off by portions of both the floor panel 34 and the rocker inner panel 24. Also, an outside end portion 34A in the vehicle width direction of the floor panel 34 is joined to the inner panel 32, for example, such that in the sectional view shown in FIG. 3, the rocker 12 is structured as a section that is closed off by portions of both the floor panel 34 and the inner panel 32.

As an example of vertical offset inhibiting means for inhibiting relative vertical movement between the load-transmitting member 18 and the rear side member 14 when a lateral load F is being transmitted, a recessed portion 24A that is recessed toward the inside, in the vehicle width direction is provided in a position where the load-transmitting member 18 and the rear side member 14 overlap in the vehicle width direction. When the lateral load F is transmitted, an end portion 18C that is on the inside, in the vehicle width direction, (hereinafter simply referred to as "inside end portion 18C) of the load transmitting portion 18 fits into this recessed portion 24A thereby making it possible to inhibit vertical offset between the load transmitting portion 18 and the rocker inner 24.

As shown in FIGS. 2 and 3, the rear side member 14 is one type of vehicle body frame member that is provided at a rear portion of the vehicle body 10 such that a load can at least be transmitted in the vehicle width direction between the rockers 12, and extends in the longitudinal direction of the vehicle body. This rear side member 14 includes a low portion 14L on the front side in the longitudinal direction of the vehicle body, a high portion 14H that is farther to the rear side of the vehicle body than the low portion 14L, and a rising portion 14A that connects the low portion 14L with the high portion 14H. The load-transmitting member 18 is arranged facing the rising portion 14A in the vehicle width direction. Also, a bulkhead 36, which reinforces the rising member 14A against the lateral load F, is provided partially in the rising portion 14A where it faces the load-transmitting member 18. The rear side member 14 is not limited to being directly connected to the rocker 12. That is, another member may be interposed therebetween as long as the load is transmitted at least in the vehicle width direction from the rocker 12 to the rear side member 14.

The bulkhead 36 may be, for example, rib-shaped in which a plurality of metal plates arranged parallel with one another in the vehicle width direction are lined up and fixed in the longitudinal direction in the rising portion 14A, or in which metal plates, having hat-shaped cross-sections or the like, are provided in the vehicle width direction in the rising portion 14A. Moreover, the bulkhead 36 may be a block-shaped rigid member. That is, the bulkhead 36 is not limited as long as it is a member that is mainly able to transmit a load applied in the vehicle width direction, in the vehicle width direction.

Referring to FIG. 3, the vehicle body side portion reinforcing-member 16 is, for example, an impact beam which is able to transmit a lateral load F that is input offset to a door 38, for example, to a vehicle body frame member including the rocker 12 and the rear side member 14, and is able to reinforce the vehicle body side portion against the lateral load F.

More specifically, the vehicle body side portion reinforcing-member 16 is arranged between the outer door panel 40 of the door 38 and the inner door panel 42 of the door 38, and is fixed to the inner door panel 42 with a mounting bracket 44. Also, as shown in FIG. 2, the vehicle body side portion reinforcing-member 16 is mounted at an angle with the rear end portion 16A, slanting downward so that the load-transmitting member 18, which faces the rear end portion 16A in the vehicle width direction, can be made smaller in the vertical direction of the vehicle body.

Referring to FIGS. 1 and 3, the load-transmitting member 18 is a rigid member that can transmit the lateral load F input to the vehicle body side portion reinforcing-member 16 to the rear side member 14, and is arranged between the vehicle body side portion reinforcing-member 16 and the rear side member 14, which is to the inside, in the vehicle width direction, of the vehicle body side portion reinforcing-member 16.

Further, the upper edge 18A of the load-transmitting member 18 is joined to the extending portion 30C of the reinforcement 30 in the rocker 12 and the lower edge 18B that is joined to the lower edge 30B of the reinforcement 30. The inside end portion 18C is near the recessed portion 24A of the rocker inner 24.

As shown in FIG. 3, the positions of the upper edge 18A and the lower edge 18B of the load-transmitting member 18 are different in the vehicle width direction so a lower side leg portion 18F is formed shorter in the vehicle width direction than an upper side leg portion 18E. The rear side member 14 is provided in a lower position in the vertical direction of the vehicle body than the rear end portion 16A of the vehicle body side portion reinforcing-member 16. The upper edge 18A of the load-transmitting member 18 faces the rear end portion 16A of the vehicle body side portion reinforcing-member 16 in the vehicle width direction. The upper side leg portion 18E of the load transmitting portion 18 slants downward, toward the inside in the vehicle width direction, and the inside end portion 18C faces the rear side member 14 in the vehicle width direction. The slope of the upper side leg portion 18E is made substantially parallel with the direction in which the load is transmitted, for example (i.e., the direction of arrow A).

A protruding portion 18D, which is smaller than the recessed portion 24A, is formed on the inside end portion 18C of the load-transmitting member 18 such that when the lateral load F is transmitted to the rear side member 14, the inside end portion 18C of the load-transmitting member 18 engages the recessed portion 24A in the vertical direction of the vehicle body. The protruding portion 18D and the recessed portion 24A together constitute the vertical offset inhibiting means. The vertical offset inhibiting means is by no means limited to this structure. That is, any structure can be used as long as it can inhibit relative vertical movement between the load-transmitting member 18 and the rear side member 14. Accordingly, for example, a recessed portion may be provided on the load-transmitting member 18 and a protruding portion may be provided on the rear side member 14. A structure may also be provided which inhibits vertical offset without providing portions that are pre-shaped so as to be able to engage together, by having one member able to engage with the other member by deforming when the lateral load F is transmitted.

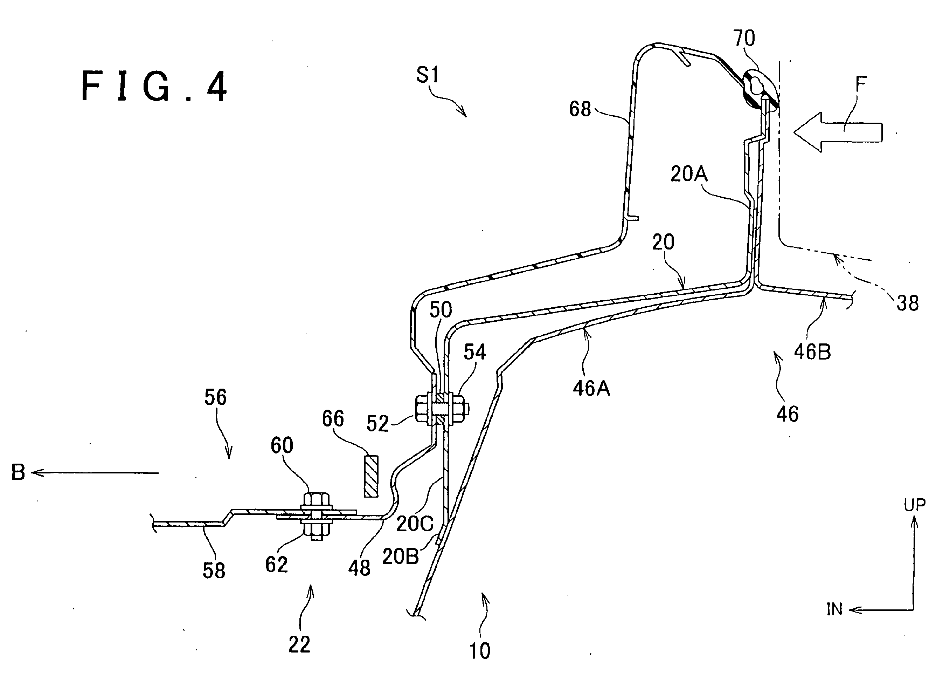

Referring to FIGS. 1, 2, and 4, the reinforcing-member 20 is a rigid member, which is provided above the rear side member 14 in the rear wheelhouse 46 and reinforces the rear wheelhouse 46 against the lateral load F. This reinforcing-member 20 is provided along the outside of the rear wheelhouse inner 46A on the front side in the longitudinal direction of the vehicle body near the center in the vertical direction of the vehicle body of the rear wheelhouse inner 46A, for example, and is structured with a closed cross-section. Also, as shown in FIG. 1, the reinforcing-member 20 has a substantially hat-shaped cross-section. The front edge 20A of the reinforcing-member 20 is welded to both edge portions of the rear wheelhouse inner 46A and the rear wheelhouse outer 46B that face the door 38 when the door 38 is closed. The rear edge 20B is welded to the rear wheelhouse inner 46A (see FIG. 4). The rear edge 20B side of the reinforcing-member 20 extends toward and along the inside, in the vehicle width direction, of the rear wheelhouse inner 46A. A rear seat bracket 48 is rotatably connected via a collar 50 by a nut 54 and a bolt 52 to the extending portion 20C so that it can rotate around an axis in the vehicle width direction.

Referring now to FIGS. 1 and 4, the second load-transmitting member 22 is a rigid member, which is provided as load-transmitting means to the inside in the vehicle width direction of the reinforcing-member 20, and can transmit the lateral load F input via the reinforcing-member 20 in the vehicle width direction. This second load-transmitting member 22 is provided on a vehicular rear seat portion 56, for example. More specifically, the second load-transmitting member 22 includes, for example, the seat back plate 58, which is a frame of a seat back of the vehicular rear seat portion 56 and the rear seat bracket 48 that connects the seat back plate 58 with the reinforcing-member 20. The seat back plate 58 is fixed to the rear seat bracket 48 by a nut 62 and a bolt 60. As shown in FIG. 1, a seat back frame 64, for example, is provided on the seat back plate 58, and a seat frame 66 is also provided on a seat cushion side (the seat cushion is not shown in the drawing). The seat back frame includes not only the seat back frame 58, but also the seat back frame 64.

As shown in FIG. 4, the reinforcing-member 20 is covered by a trim 68, which is interior material, for example. Shield rubber 70, for example, may be provided at the border portion between the trim 68 and the edge portions of the rear wheelhouse inner 46A and the rear wheelhouse outer 46B.

In this example embodiment, the second load-transmitting member 22 includes the rear seat bracket 48 and the seat back plate 58, but is not limited to these as long as it is a member that can mainly transmit a load that is applied in the vehicle width direction, in the vehicle width direction. Therefore, the second load-transmitting member 22 may also be a rigid member, such as a pipe, that extends in the vehicle width direction between the reinforcing-member 20 that reinforces one of the rear wheelhouse inners 46A of the vehicle body and the reinforcing-member 20 that reinforces the other rear wheelhouse inner 46A of the vehicle body, for example.

Referring now to FIGS. 1 and 3, in the vehicle body rear portion structure S1, the vehicle body side portion reinforcing-member 16 is provided in the door 38, for example, above the rocker 12 in a side portion of the vehicle body. In addition, the load-transmitting member 18 is provided between the vehicle body side portion reinforcing-member 16 and the rear side member 14. As a result, when the lateral load F is input to the door 38 during a side impact, that lateral load F is transmitted from the rear end portion 16A of the vehicle body side portion reinforcing-member 16 to the rear side member 14 via the load-transmitting member 18.

More specifically, as shown in FIG. 3, when the lateral load F is input to the door 38 from a side impact and the door outer panel 40 deforms to the inside, in the vehicle width direction, the door outer panel 40 abuts against the vehicle body side portion reinforcing-member 16. When the vehicle body side portion reinforcing-member 16 is pushed to the inside, in the vehicle width direction, the lateral load F is transmitted from that vehicle body side portion reinforcing-member 16 to the load-transmitting member 18 through the door inner panel 42, the rocker outer 26, and the reinforcement 30.

When the rocker outer 26 is pushed to the inside, in the vehicle width direction, by the lateral load F, the inside end portion 18C of the load-transmitting member 18 abuts against the rocker inner 24 such that the lateral load F is transmitted in the direction of arrow A through the upper side leg portion 18E that is formed substantially parallel with the direction in which the load is transmitted and on to the rear side member 14, which is reinforced by the bulkhead 36, after which it is distributed to another vehicle body frame member, such as a cross member, not shown. As a result, the reaction force of the vehicle body 10 against the lateral load F can be improved, pushing against the impacting body, not shown, and reducing the amount that the impacting body pushes into the vehicle body 10. Also, the lower side leg portion 18F of the load-transmitting member 18 is formed shorter in the vehicle width direction than the upper side leg portion 18E so even if the location where the lateral load F is applied to the vehicle body 10, i.e., the rear end portion 16A of the vehicle body side portion reinforcing-member 16, is offset in the vertical direction of the vehicle body from the rear side member 14, the load-transmitting member 18 does not easily deform downward in the vertical direction of the vehicle body when the load is transmitted.

In this manner, vehicle body deformation of the vehicle body rear portion is inhibited by transmitting the lateral load F to the rear side member 14 and distributing it. Also, when the load-transmitting member 18 abuts against the rocker inner 24, the protruding portion 18D formed on the inside end portion 18C of the load-transmitting member 18 engages the recessed portion 24A of the rocker inner 24 in the vertical direction of the vehicle body, thus inhibiting relative vertical movement between the load-transmitting member 18 and the rear side member 14. Accordingly, even if the path along which the load is transmitted (hereinafter also referred to simply as "load transmitting path ") from the vehicle body side portion reinforcing-member 16 to the rear side member 14 is vertically offset, sliding does not easily occur at the portion where the load-transmitting member 18 and the rear side member 14 face one another, i.e., at the portion where the inside end portion 18C and the rocker inner 24 contact one another. As a result, when the lateral load F is input, the lateral load F tends to stay on the load-transmitting path from the load-transmitting member 18 to the rear side member 14. Providing this kind of direct load transmitting path thus enables the lateral load F to be directly, i.e., efficiently, transmitted to the rear side member 14.

Furthermore, as shown in FIG. 2, with the vehicle body rear portion structure S 1, the rising portion 14A is provided on the rear side member 14. Accordingly, the positions in the vertical direction of the vehicle body of the vehicle body side portion reinforcing-member 16 and the rear side member 14 can be close together. Also, the load-transmitting member 18 is provided facing the rising portion 14A of the rear side member 14 in the vehicle width direction. Accordingly, the difference in height between the position where the lateral load F is transmitted from the vehicle body side portion reinforcing-member 16 to the load-transmitting member 18 and the position where the lateral load F is transmitted from the load-transmitting member 18 to the rear side member 14 can be reduced, which in turn enables a reduction in vehicle body reinforcement compared to when that difference is large.

Meanwhile, referring to FIGS. 1 and 4, the lateral load F input near the rear wheelhouse 46 via the door 38 (FIG. 4), for example, from a side impact, can be transmitted in the vehicle width direction, i.e., in the direction of arrow B, through the reinforcing-member 20 to the second load-transmitting member 22. More specifically, as shown in FIG. 4, when the lateral load F is input to the edge portion of the rear wheelhouse 46 via the door 38, the lateral load F is first transmitted to the reinforcing-member 20 and then from the reinforcing-member 20 to the seat back frame 58 via the rear seat bracket 48 in the direction of arrow B.

The reinforcing-member 20 extends from the front edge 20A, which overlaps with the edge portion of the rear wheelhouse 46, along the rear wheelhouse inner 46A up to a position near the seat back plate 58 of the vehicular rear set portion 56. As a result, even if the location where the lateral load F was input is offset forward, in the longitudinal direction of the vehicle, of the vehicular rear seat portion 56, the lateral load F can be transmitted in the direction of arrow B from the reinforcing-members 20 of one rear wheelhouse 46 to the reinforcing-member 20 of the other rear wheelhouse 46 such that vehicle body deformation above the rear side member 14 in FIG. 2 is inhibited in a wide area in the vertical direction of the vehicle body 10.

Further, with the vehicle body rear portion structure S1, the rear seat bracket 48 and the seat back fraine 58, which are examples of the second load-transmitting portion 22, are provided on the vehicular rear seat portion 56. As a result, deformation of the vehicle body at a portion near an occupant, not shown, seated in the vehicular rear seat, also not shown, can be inhibited, which enables a reduction in reinforcement of the vehicle body 10 compared to when the second load-transmitting member 22 is provided at a portion far from the occupant.

Moreover, with the vehicle body rear portion structure S1, the lateral load F is transmitted from the vehicle body side portion reinforcing-member 16 to the rear side member 14 via the load-transmitting member 18 and also transmitted to the second load-transmitting member 22 via the reinforcing-member 20, which enables the lateral load F to be distributed to various vehicle body frame members.

In the example embodiment, the load transmitting path of the lateral load F includes both the path along which the lateral load F is transmitted from the vehicle body side portion reinforcing-member 16 to the rear side member 14 via the load-transmitting member 18, and the path along which the lateral load F is transmitted from the reinforcing-member 20 to the second load-transmitting member 22. Alternatively, however, the load-transmitting path may include only one of those paths.

### [Second example embodiment]

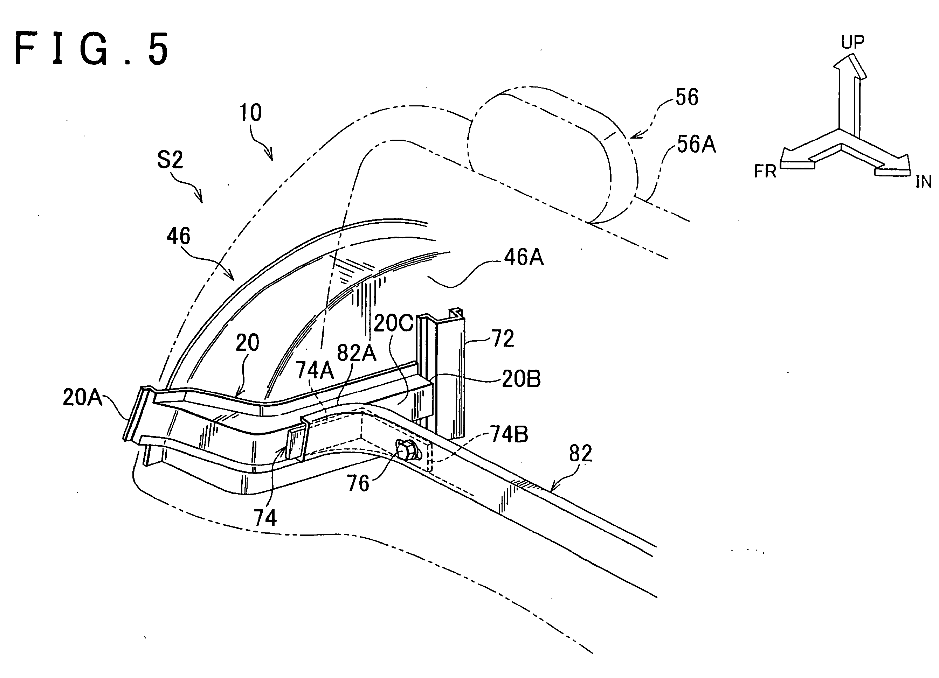

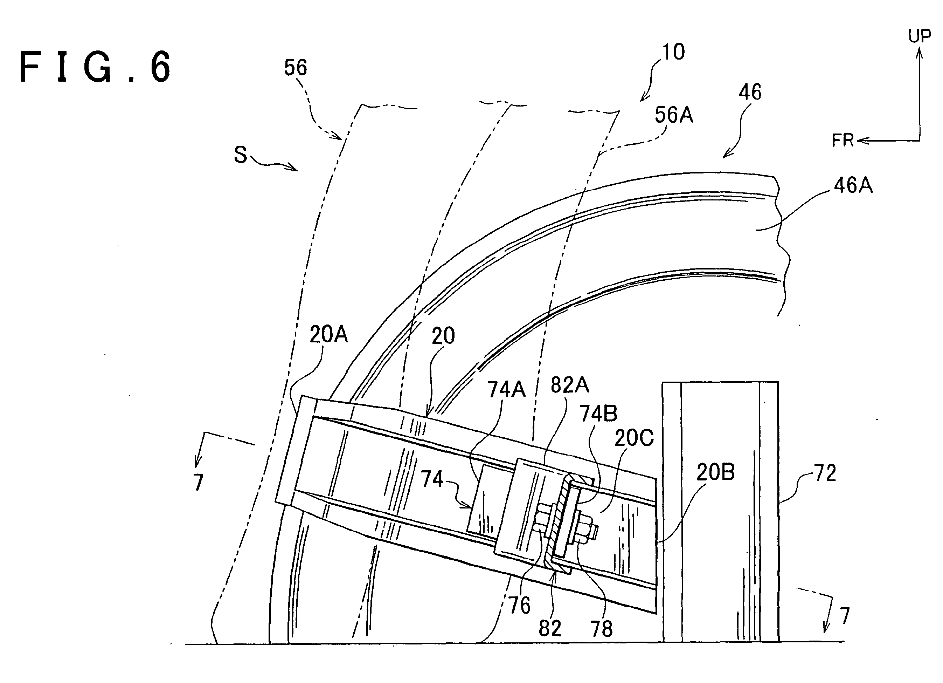

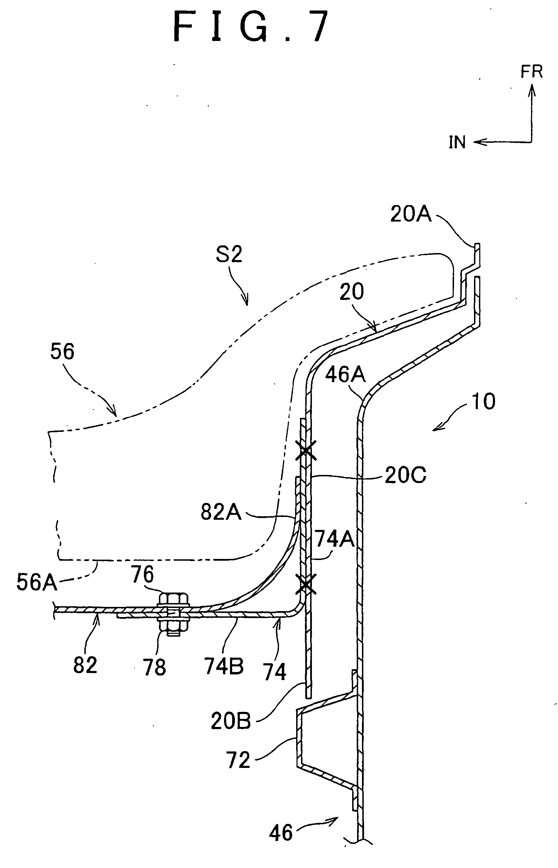

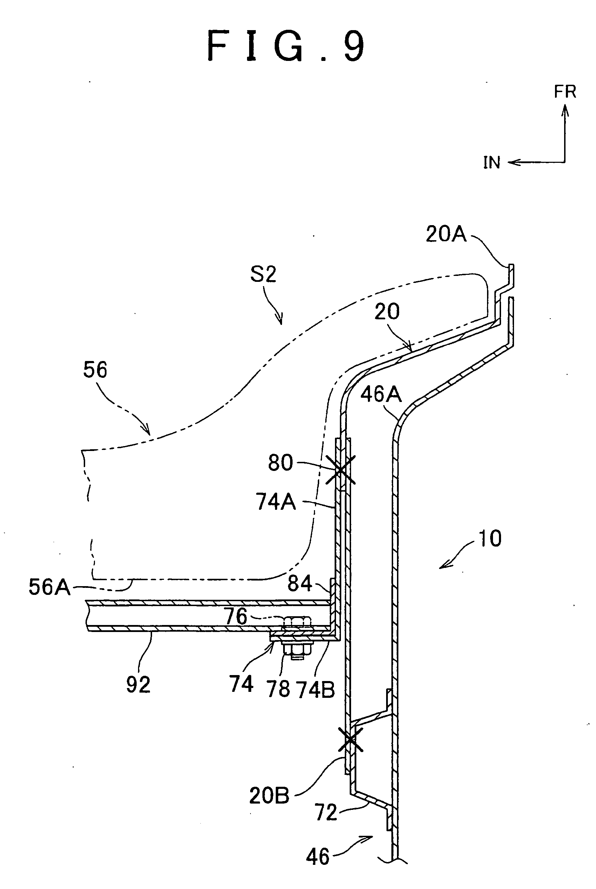

Referring to FIGS. 5 to 7, a vehicle body rear portion structure S2 according to a second example embodiment includes a second reinforcing-member 72, which extends in the vertical direction of the vehicle body, to the rear of the reinforcing-member 20, in the longitudinal direction of the vehicle body, and reinforces the rear wheelhouse inner 46A, for example, of the rear wheelhouse 46. The reinforcing-member 20 either extends to near the second reinforcing-member 72 (FIG. 7) or is connected to this second reinforcing-member 72 (FIG. 9).

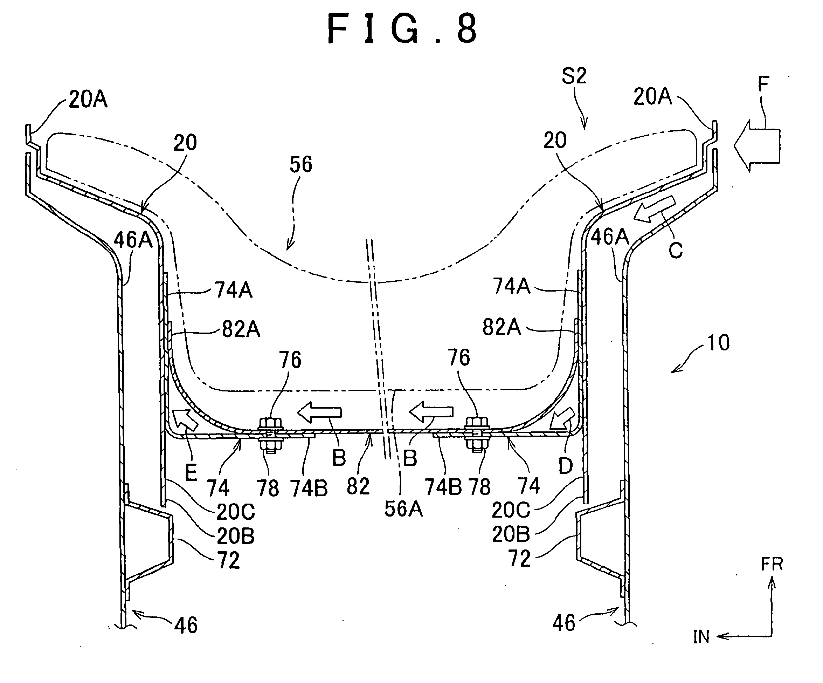

The second reinforcing-member 72 has a hat-shaped cross-section, for example, and extends in the vertical direction of the vehicle body. The second reinforcing-member 72 is fixed to the inside surface, in the vehicle width direction, of the center portion in the longitudinal direction of the vehicle body, for example, of the rear wheelhouse inner 46A and inhibits the rear wheelhouse 46 from caving in when lateral load F is input near the rear wheelhouse 46 (FIG. 8).

A second load-transmitting member 82 in this example embodiment is a rigid member, which extends in the vehicle width direction, to the rear of, and adjacent to, the vehicular rear seat portion 56. Both end portions 82A are curved forward, in the longitudinal direction of the vehicle body, along the extending portions 20C of the reinforcing-member 20 so that they overlap in the vehicle width direction with the extending portions 20C. That is, the end portions 82A overlap with the extending portions 20C when viewed from the side of the vehicle body. The second load-transmitting member 82 has a U-shaped cross-section, for example, so that elastic buckling does not occur when the lateral load F is transmitted. Lateral buckling in this case refers to a phenomenon in which, in a state where there is no plastic deformation in the material, the relationship between the load and displacement becomes geometrically nonlinear, after which the buckling point is reached.

One side 74A of a mounting bracket 74 that is formed in an L-shape, for example, is welded to the extending portion 20C of the reinforcing-member 20. The other side 74B, which extends to the inside in the vehicle width direction, from the rear end of the one side 74A is fixed to the second transmitting-member 82 by a nut 78 and a bolt 76. As shown in FIG. 7, a generally triangular truss structural portion is formed at the end portion 82A of the second load-transmitting member 82 by the end portion 82A and the mounting bracket 74. The truss structural portion reinforces the end-portion 82A of the second load-transmitting member 82.

The reinforcing-member 20 is not limited to an integrated structure. For example, the reinforcing-member 20 may also be welded as separate front and rear portions to the one side 74A of the mounting bracket 74 at a joint 80, as shown in FIG. 9. Also, the rear edge 20B of the reinforcing-member 20 may be joined with the second reinforcing-member 72, which increases the rigidity of the reinforcing-member 20. Moreover, instead of the second load-transmitting member 82 in FIG. 7, a second load-transmitting member 92 that is pipe-shaped, for example, may be used. The second load-transmitting member overlaps with the reinforcing-member 20 when viewed from the side of the vehicle body, as shown in FIG. 9. In FIG. 9, the second load-transmitting member 92 is welded, for example, to a base 84 beforehand and this base 84 is then fixed to the one side 74B of the mounting bracket 74 by the nut 78 and the bolt 76.

The other portions are the same as in the first example embodiment so like reference numerals will be used to denote like portions and descriptions thereof will be omitted.

Referring to FIG. 8, with the vehicle body rear portion structure S2 the second reinforcing-member 72 is provided which extends in the vertical direction of the vehicle body to the rear, in the longitudinal direction of the vehicle body, of the reinforcing-member 20 and reinforces the rear wheelhouse 46, and the reinforcing-member 20 extends to near the second reinforcing-member 72 or is joined to that second reinforcing-member 72. As a result, it is possible to inhibit the rear wheelhouse 46 from caving in above and below the second load-transmitting member 82 when the lateral load F is input near the rear wheelhouse 46.

Moreover, when the lateral load F is input at a location offset forward, in the longitudinal direction of the vehicle, of the seat back 56A of the vehicular rear seat portion 56, that lateral load F is first transmitted in the direction of arrow C to the reinforcing-member 20, then in the direction of arrow D to the truss structural portion which is made of the end portions 82A of the second load transmitting portion 82 and the mounting bracket 74, and then in the direction of arrow B to the second load-transmitting member 82, after which it is distributed to the opposing rear wheelhouse 46 side in the vehicle width direction.

In this way, the vehicle body rear portion structure S2 is not only able to directly, i.e., efficiently, transmit the lateral load F from the side where it was input to the opposite rear wheelhouse 46 side in the vehicle width direction (i.e., in the direction of arrow E) from the reinforcing-member 20 to the second load-transmitting member 82 via the load transmitting path, but also able to more reliably inhibit vehicle body deformation over a wide area in the vertical direction of the vehicle body at the vehicular rear seat portion 56 by inhibiting the rear wheelhouse 46 from caving in.

Also with the vehicle body rear portion structure S2, the second load-transmitting member 82 is separate from the vehicular rear seat portion 56. Therefore, as long as a seat pad has not yet been attached, the second load-transmitting member 82 can be tightened from the front inside the vehicle cabin, as it generally is. Also, a load-transmitting member on the vehicular rear seat portion 56 is no longer necessary so the degree of freedom in the seat design is increased.

Furthermore, the second load-transmitting member 82 is joined directly to the vehicle body 10 so the load can be reliably transmitted without relying on the vehicular rear seat portion 56.

Moreover, although in the foregoing example embodiments the vehicle body side portion reinforcing-member 16, the load-transmitting member 18, and the second load-transmitting members 22, 82, and 92 are given as examples of the load-transmitting means, the load-transmitting means is not limited to these. Other means may be used as long as it is able to suppress vehicle body deformation by transmitting the lateral load F to a vehicle body frame member.

## Claims

1. A vehicle body rear portion structure having:
a rocker (12), which extends in a longitudinal direction of a vehicle body (10) on both sides of the vehicle body (10);
a rear side member (14), which is provided at a rear portion of the vehicle body (10) to transmit a load between the rockers (12) and extends in the longitudinal direction of the vehicle body (10); and
load-transmitting means for transmitting a lateral load, input offset above at least one of the rocker (12) and the rear side member (14), to a vehicle body frame member that includes the rocker (12) and the rear side member (14) wherein
the load-transmitting means includes:
a vehicle body side portion reinforcing-member (16), which is arranged above the rocker (12) at a vehicle body side portion and reinforces the vehicle body side portion against the lateral load; and
a first load-transmitting member (18), which is arranged between the vehicle body side portion reinforcing-member (16) and the rear side member (14) that is provided laterally inward of the vehicle body side portion reinforcing-member (16) and transmits the lateral load input to the vehicle body side portion reinforcing-member (16) to the rear side member (14); and wherein
the vehicle body side portion reinforcing-member (16) is arranged between a door outer panel (40), provided as an outer portion, in the vehicle width direction, of a door (38) of the vehicle body (10), and a door inner panel (42), provided as an inner portion, in the vehicle width direction, of the door (38) of the vehicle body (10), in such a manner that a rear end side (16A), which opposes the first load-transmitting member (18), is angled downward; wherein
the rear side member (14) has:
a low portion (14L) on a front side in the longitudinal direction of the vehicle body;
a high portion (14H) which is farther to the rear in the longitudinal direction of the vehicle body than the low portion (14L); and
a rising portion (14A) that connects the low portion (14L) and the high portion (14H), and
wherein the first load-transmitting member (18) is provided facing the rising portion (14A) in the vehicle width direction,
**characterised in that** the rocker (12) includes:
a rocker outer (26) on the outside in the vehicle width direction of the vehicle body (10); and
a rocker inner (24) on the inside in the vehicle width direction of the vehicle body (10), and
wherein the first load-transmitting member (18) is provided between the rocker outer (26) and the rocker inner (24),
a bulkhead (36), which transmits a load that is applied in the vehicle width direction, is provided in the rising portion (14A) of the rear side member (14), and
the rocker (12) is provided on the outside of the rear side member (14), in the vehicle width direction.

2. The vehicle body rear portion structure according to claim 1, **characterised by** further comprising:
vertical offset inhibiting means for inhibiting relative vertical movement between the first load-transmitting member (18) and the rear side member (14) when the lateral load is transmitted.

3. The vehicle body rear portion structure according to any one of claims 1 or 2, **characterised in that** the load-transmitting means includes:
a first reinforcing-member (20), provided above the rear side member (14) of a rear wheelhouse (46), that reinforces the rear wheelhouse (46) against the lateral load; and
a second load-transmitting member (22), provided to the inside in the vehicle width direction of the first reinforcing-member (20), that transmits the lateral load input through the first reinforcing-member (20) in the vehicle width direction.

4. The vehicle body rear portion structure according to claim 3, **characterised in that** the second load-transmitting member (22) is provided on a vehicular rear seat portion (56).

5. The vehicle body rear portion structure according to claim 3 or 4, **characterised by** further comprising:
a second reinforcing-member (72), extending in the vertical direction of the vehicle body, which is father to the rear in the longitudinal direction of the vehicle body than the first reinforcing-member (20), that reinforces the rear wheelhouse (46),
wherein the first reinforcing-member (20) either extends to near the second reinforcing-member (72) or is joined to the second reinforcing-member (72).

6. The vehicle body rear portion structure according to claim 1, **characterised in that** the vertical offset inhibiting means is formed of:
a protruding portion (18D) provided on a surface of the first load-transmitting member (18), which faces the rising portion (14A) in the vehicle width direction; and
a recessed portion (24D), provided on a surface of the rocker inner (24), that faces the rising portion (14A) in the vehicle width direction and that is larger than the protruding portion (18D) of the first load-transmitting member (18).

7. The vehicle body rear portion structure according to claim 1, **characterised in that** the bulkhead (36) is formed from a plurality of metal plates having hat-shaped cross-sections and arranged parallel to the vehicle width direction.

8. The vehicle body rear portion structure according to claim 2, **characterised in that** the vehicular rear seat portion (56) has a seat back plate (58), and the second load-transmitting member (22) is a rear seat bracket (48) which connects the first reinforcing-member (20) with the seat back plate (58).

9. The vehicle body rear portion structure according to claim 2, **characterised in that** the first reinforcing-member (20) is arranged on the front side, in the longitudinal direction, of the vehicle body at a center portion in the vertical direction of the vehicle body of the rear wheelhouse (46) and extends in the longitudinal direction of the vehicle body.

## Patentansprüche

1. Aufbau eines Heckabschnitts einer Fahrzeugkarosserie, der Folgendes aufweist:
eine Schwinge (12), die sich in einer Längsrichtung einer Fahrzeugkarosserie (10) auf beiden Seiten der Fahrzeugkarosserie (10) erstreckt;
ein Rückseitenteil (14), das an einem hinteren Abschnitt der Fahrzeugkarosserie (10) vorgesehen ist, um eine Last zwischen den Schwingen (12) zu übertragen, und sich in der Längsrichtung der Fahrzeugkarosserie (10) erstreckt; und
eine Lastübertragungseinrichtung, um eine Querlast, die versetzt oberhalb mindestens entweder der Schwinge (12) oder des Rückseitenteils (14) eingebracht wird, an ein Rahmenteil der Fahrzeugkarosserie zu übertragen, welches die Schwinge (12) und das Rückseitenteil (14) umfasst,
wobei die Lastübertragungseinrichtung Folgendes umfasst:
ein Teil (16) zur Verstärkung des Seitenabschnitts der Fahrzeugkarosserie, das oberhalb der Schwinge (12) an einem Seitenabschnitt der Fahrzeugkarosserie angeordnet ist und den Seitenabschnitt der Fahrzeugkarosserie gegen die Querlast verstärkt; und
ein erstes Last übertragendes Teil (18), das zwischen dem Teil (16) zur Verstärkung des Seitenabschnitts der Fahrzeugkarosserie und dem Rückseitenteil (14) angeordnet ist, lateral innerhalb des Teils (16) zur Verstärkung des Seitenabschnitts der Fahrzeugkarosserie vorgesehen ist und die Querlast, die in das Teil (16) zur Verstärkung des Seitenabschnitts der Fahrzeugkarosserie eingebracht wird, an das Rückseitenteil (14) überträgt; und wobei
das Teil (16) zur Verstärkung des Seitenabschnitts der Fahrzeugkarosserie zwischen einem Türaußenblech (40), das als ein äußerer Abschnitt einer Tür (38) der Fahrzeugkarosserie (10) in der Breitenrichtung des Fahrzeugs vorgesehen ist, und einem Türinnenblech (42), das als ein innerer Abschnitt der Tür (38) der Fahrzeugkarosserie (10) in der Breitenrichtung des Fahrzeugs vorgesehen ist, in solch einer Weise angeordnet ist, dass die rückwärtige Seite (16A), welche dem ersten Last übertragenden Teil (18) gegenüberliegt, nach unten abgewinkelt ist; wobei
das Rückseitenteil (14) Folgendes aufweist:
einen tiefen Abschnitt (14L) auf einer Vorderseite in der Längsrichtung der Fahrzeugkarosserie;
einen hohen Abschnitt (14H), der in der Längsrichtung der Fahrzeugkarosserie weiter hinten als der tiefe Abschnitt (14L) ist; und
einen ansteigenden Abschnitt (14A), der den tiefen Abschnitt (14L) und den hohen Abschnitt (14H) verbindet, und
wobei das erste Last übertragende Teil (18) so vorgesehen ist, dass es dem ansteigenden Abschnitt (14A) in der Fahrzeugbreitenrichtung gegenüberliegt,
**dadurch gekennzeichnet, dass** die Schwinge (12) Folgendes aufweist:
eine äußere Schwinge (26) auf der Außenseite in der Fahrzeugbreitenrichtung der Fahrzeugkarosserie (10); und
eine innere Schwinge (24) auf der Innenseite in der Fahrzeugbreitenrichtung der Fahrzeugkarosserie (10), und
wobei das erste Last übertragende Teil (18) zwischen der äußeren Schwinge (26) und der inneren Schwinge (24) vorgesehen ist,
eine Trennwand (36) in dem ansteigenden Abschnitt (14A) des Rückseitenteils (14) vorgesehen ist, die eine Belastung überträgt, die in der Fahrzeugbreitenrichtung wirkt, und
die Schwinge (12) in der Fahrzeugbreitenrichtung auf der Außenseite des Rückseitenteils (14) vorgesehen ist.

2. Aufbau eines Heckabschnitts einer Fahrzeugkarosserie nach Anspruch 1, **dadurch gekennzeichnet, dass** er weiterhin Folgendes aufweist:
eine Einrichtung zur Verhinderung eines senkrechten Versatzes, um eine relative senkrechte Bewegung zwischen dem ersten Last übertragenden Teil (18) und dem Rückseitenteil (14) zu verhindern, wenn die Querlast übertragen wird.

3. Aufbau eines Heckabschnitts einer Fahrzeugkarosserie nach einem der Ansprüche 1 oder 2, **dadurch gekennzeichnet, dass** die Lastübertragungseinrichtung Folgendes aufweist:
ein erstes Verstärkungsteil (20), das oberhalb des Rückseitenteils (14) eines hinteren Radkastens (46) vorgesehen ist, welches den hinteren Radkasten (46) gegen die Querlast verstärkt; und
ein zweites Last übertragendes Teil (22), das in der Fahrzeugbreitenrichtung auf der Innenseite des ersten Verstärkungsteils (20) vorgesehen ist, welches die Querlast, die über das erste Verstärkungsteil (20) eingebracht wird, in der Fahrzeugbreitenrichtung überträgt.

4. Aufbau eines Heckabschnitts einer Fahrzeugkarosserie nach Anspruch 3, **dadurch gekennzeichnet, dass** das zweite Last übertragende Teil (22) an einem Abschnitt (56) eines Rücksitzes des Fahrzeugs vorgesehen ist.

5. Aufbau eines Heckabschnitts einer Fahrzeugkarosserie nach Anspruch 3 oder 4, **dadurch gekennzeichnet, dass** er weiterhin Folgendes aufweist:
ein zweites Verstärkungsteil (72), das sich in der senkrechten Richtung der Fahrzeugkarosserie erstreckt, und in der Längsrichtung der Fahrzeugkarosserie weiter hinten als das erste Verstärkungsteil (20) ist, welches den hinteren Radkasten (46) verstärkt,
wobei das erste Verstärkungsteil (20) sich entweder in die Nähe des zweiten Verstärkungsteils (72) erstreckt oder mit dem zweiten Verstärkungsteil (72) verbunden ist.

6. Aufbau eines Heckabschnitts einer Fahrzeugkarosserie nach Anspruch 2, **dadurch gekennzeichnet, dass** die Einrichtung zur Verhinderung des senkrechten Versatzes aus Folgendem gebildet ist:
einem vorstehendem Abschnitt (18D), der auf einer Oberfläche des ersten Last übertragenden Teils (18) vorgesehen ist, welche dem ansteigenden Abschnitt (14A) in dem Fahrzeug gegenüberliegt; und
einem zurückgesetzten Abschnitt (24D), der auf einer Oberfläche der inneren Schwinge (24) vorgesehen ist, welche dem ansteigenden Abschnitt (14A) in der Fahrzeugbreitenrichtung gegenüberliegt und größer als der vorstehende Abschnitt (18D) des ersten Last übertragenden Teils (18) ist.

7. Aufbau eines Heckabschnitts einer Fahrzeugkarosserie nach Anspruch 1, **dadurch gekennzeichnet, dass** die Trennwand (36) aus einer Vielzahl von Metallplatten gebildet ist, die hutförmige Querschnitte aufweisen und parallel zu der Fahrzeugbreitenrichtung angeordnet sind.

8. Aufbau eines Heckabschnitts einer Fahrzeugkarosserie nach Anspruch 2, **dadurch gekennzeichnet, dass** der Abschnitt (56) des Rücksitzes des Fahrzeugs eine Rücksitzplatte (58) aufweist, und dass das zweite Last übertragende Teil (22) ein Rücksitzhalter (48) ist, welcher das erste Verstärkungsteil (20) mit der Rücksitzplatte (58) verbindet.

9. Aufbau eines Heckabschnitts einer Fahrzeugkarosserie nach Anspruch 2, **dadurch gekennzeichnet, dass** das erste Verstärkungsteil (20) auf der Vorderseite in der Längsrichtung der Fahrzeugkarosserie an einem in der senkrechten Richtung der Fahrzeugkarosserie mittleren Abschnitt des hinteren Radkastens (46) angeordnet ist und sich in der Längsrichtung der Fahrzeugkarosserie erstreckt.

## Revendications

1. Structure de la partie arrière de la carrosserie d'un véhicule ayant:
un balancier (12), qui s'étend dans une direction longitudinale de la carrosserie (10) d'un véhicule sur les deux côtés de la carrosserie (10) du véhicule;
un élément (14) côté arrière, qui est prévu au niveau d'une partie arrière de la carrosserie (10) du véhicule pour transmettre une charge entre les balanciers (12) et qui s'étend dans la direction longitudinale de la carrosserie (10) du véhicule; et
un moyen de transmission de charge pour transmettre une charge latérale, introduite de manière décalée au-dessus d'au moins l'un du balancier et de l'élément (14) côté arrière, à un élément du châssis de la carrosserie du véhicule qui comprend le balancier (12) et l'élément (14) côté arrière où
le moyen de transmission de charge comprend:
un élément de renforcement (16) d'une partie côté carrosserie du véhicule, qui est agencé au-dessus du balancier (12) au niveau d'une partie côté carrosserie du véhicule et qui renforce la partie côté carrosserie du véhicule contre la charge latérale; et
un premier élément de transmission de charge (18), qui est agencé entre l'élément de renforcement (16) de la partie côté carrosserie du véhicule et l'élément côté arrière (14) qui est latéralement prévu vers l'intérieur de l'élément de renforcement (16) de la partie côté carrosserie du véhicule et qui transmet la charge latérale introduite à l'élément de renforcement (16) de la partie côté carrosserie du véhicule à l'élément (14) côté arrière; et où
l'élément de renforcement (16) de la partie côté carrosserie du véhicule est agencé entre un panneau externe (40) d'une portière, faisant office de partie externe, dans la direction de largeur du véhicule, d'une portière (38) de la carrosserie (10) du véhicule, et un panneau interne (42) d'une portière, faisant office de partie interne, dans la direction de largeur du véhicule, de la portière (38) de la carrosserie (10) du véhicule de sorte qu'un côté (16A) d'extrémité arrière, en vis-à-vis du premier élément de transmission de charge (18), soit orienté vers le bas; où
l'élément (14) côté arrière possède:
une partie inférieure (14L) sur un côté avant dans la direction longitudinale de la carrosserie du véhicule;
une partie supérieure (14H) qui est plus éloignée de la partie arrière dans la direction longitudinale de la carrosserie du véhicule que la partie inférieure (14L); et
une partie en élévation (14A) qui relie la partie inférieure (14L) et la partie supérieure (14H), et
où le premier élément de transmission de charge (18) est prévu de sorte à regarder la partie en élévation (14A) dans la direction de largeur du véhicule,
**caractérisée en ce que** le balancier (12) comprend:
un extérieur (26) du balancier sur la partie extérieure dans la direction de largeur du véhicule de la carrosserie (10) du véhicule; et
un intérieur (24) du balancier sur la partie intérieure dans la direction de largeur du véhicule de la carrosserie (10) du véhicule, et
où le premier élément de transmission de charge (18) est prévu entre l'extérieur (26) du balancier et l'intérieur (24) du balancier,
un tablier (36), qui transmet une charge qui est appliquée dans la direction de largeur du véhicule, est pourvu dans la partie en élévation (14A) de l'élément (14) côté arrière, et le balancier (12) est pourvu sur la partie extérieure de l'élément (14) côté arrière, dans la direction de largeur du véhicule.

2. Structure de la partie arrière de la carrosserie d'un véhicule selon la revendication 1, **caractérisée par** le fait de comprendre en plus:
un moyen empêchant le décalage vertical pour empêcher un mouvement vertical relatif entre le premier élément de transmission de charge (18) et l'élément (14) côté arrière lorsque la charge latérale est transmise.

3. Structure de la partie arrière de la carrosserie d'un véhicule selon l'une quelconque des revendications 1 ou 2, **caractérisée en ce que** le moyen de transmission de charge comprend:
un premier élément de renforcement (20), pourvu au-dessus de l'élément (14) côté arrière d'un passage de roue (46) arrière, qui renforce le passage de roue (46) arrière contre la charge latérale; et
un deuxième élément de transmission de charge (22), pourvu à la partie intérieure dans la direction de largeur du véhicule du premier élément de renforcement (20), qui transmet la charge latérale entrée par le premier élément de renforcement (20) dans la direction de largeur du véhicule.

4. Structure de la partie arrière de la carrosserie d'un véhicule selon la revendication 3, **caractérisée en ce que** le deuxième élément de transmission de charge (22) est pourvu sur une partie d'un siège (56) arrière du véhicule.

5. Structure de la partie arrière de la carrosserie d'un véhicule selon la revendication 3 ou 4, **caractérisée par** le fait de comprendre en plus:
un deuxième élément de renforcement (72), s'étendant dans la direction verticale de la carrosserie du véhicule, qui est plus écartée de la partie arrière dans la direction longitudinale de la carrosserie du véhicule que le premier élément de renforcement (20), qui renforce le passage de roue (46) arrière,
où le premier élément de renforcement (20) s'étend de manière à se rapprocher du deuxième élément de renforcement (72) ou est relié au deuxième élément de renforcement (72).

6. Structure de la partie arrière de la carrosserie d'un véhicule selon la revendication 1, **caractérisée en ce que** le moyen empêchant le décalage vertical est formé de:
une partie en protubérance (18D) pourvue sur une surface du premier élément de transmission de charge (18), qui regarde la partie en élévation (14A) dans la direction de largeur du véhicule; et
une partie cavitaire (24D), pourvue sur une surface De l'intérieur (24) du balancier, qui regarde la partie en élévation (14A) dans la direction de largeur du véhicule et qui est plus grande que la partie en protubérance (18D) du premier élément de transmission de charge (18).

7. Structure de la partie arrière de la carrosserie d'un véhicule selon la revendication 1, **caractérisée en ce que** le tablier (36) est formé d'une pluralité de plaques métalliques ayant des sections transversales sous forme de chapeau et agencées parallèlement à la direction de largeur du véhicule.

8. Structure de la partie arrière de la carrosserie d'un véhicule selon la revendication 2, **caractérisée en ce que** la partie d'un siège (56) arrière du véhicule a une plaque de dossier (58), et le deuxième élément de transmission de charge (22) est une patte de fixation (48) du siège arrière qui relie le premier élément de renforcement (20) à la plaque de dossier (58).

9. Structure de la partie arrière de la carrosserie d'un véhicule selon la revendication 2, **caractérisée en ce que** le premier élément de renforcement (20) est agencé côté avant, dans la direction longitudinale, de la carrosserie du véhicule au niveau d'une partie centrale dans la direction verticale de la carrosserie du véhicule du passage de roue (46) arrière et s'étend dans la direction longitudinale de la carrosserie du véhicule.
